# EUROPÄISCHE PATENTANMELDUNG

(11) **EP 2 360 769 A1**
(43) Veröffentlichungstag der Anmeldung: **24.08.2011**
(21) Anmeldenummer: 10014186.0
(22) Anmeldetag: 02.11.2010
(51) Int. Cl.: H01M 8/24, H01M 8/04

(54) **Temperaturregelung von Brennstoffzellensystemen**

(30) Priorität: 02.11.2009 AT 17292009
(71) Anmelder: CLIMT Energiesysteme GmbH, 8051 Graz (AT)
(72) Erfinder: Hauth, Martin Dipl.-Ing., A-8020 Graz (AT); Wancura, Herbert Ing., A-8053 Graz (AT); Werber, Rudolf, A-8580 Köflach (AT)

(57) **Zusammenfassung**

Einrichtung zur Regelung der Temperatur eines Brennstoffzellenverbundes durch die Trennung der Kühlfunktion von der Oxidationsfunktion des kathodenseitig zugeführten Gasstroms mithilfe von wenigstens einem im Gasstrom im Bereich des Zellverbundes angebrachten Kühlelement, dass einen Teil der im Betrieb entstehenden Prozesswärme aufnimmt und dadurch die Temperatur im gesamten Strömungsbereich innerhalb des reaktiven Bereiches des Brennstoffzellensystems auf gleichem Niveau hält.

## Beschreibung

### Einleitung:

Der Wunsch nach intelligenten Energiemanagementkonzepten verlangt immer mehr nach gesamtheitlich betrachteten Lösungen, die sich nicht nur mit der Optimierung der eigentlichen Nutzarbeit beschäftigen, sondern auch die Berücksichtigung und Einbindung von Verlustenergie, zumeist in Form von Abwärme vorliegend, in den Gesamtnutzungsgrad erlauben.

Vor allem im Bereich von Hochtemperaturbrennstoffzellen gilt es sich dieser Problematik anzunehmen. Geht man dabei von einem durchschnittlichen elektrischen Wirkungsgrad von rund 50% aus, so ist das Potential der Abwärmenutzung deutlich zu erkennen.

Da der Wirkungsgrad eines Brennstoffzellensystems, im nachfolgenden kurz Stack genannt, im Gegensatz zu herkömmlichen Dampfkreisläufen nicht vom Carnot-Wirkungsgrad abhängt, sondern im Gegenteil mit steigender Arbeitstemperatur sinkt, wird grundsätzlich versucht die Arbeitstemperatur des Stacks so gering wie möglich zu halten.

Die untere mögliche Arbeitstemperatur bei der noch eine entsprechende elektrische Leistung erzielt werden kann, wird limitiert durch einen deutlich verringerten Ionentransport im Elektrolyten aufgrund zu geringer Temperatur im Stack.

### Stand der Technik:

Brennstoffzellensysteme werden derzeit vorwiegend in planaren Strukturen realisiert. Dabei werden plattenförmige Einzelzellen getrennt durch wärmeleitende undurchlässige Zellplatten, den sogenannten bipolaren Platten oder Interkonnektoren, die der Verteilung der Reaktionsmittel und zur Kühlfunktion sowie zur elektrischen Kontaktierung dienen, angeordnet. In diesen planaren Brennstoffzellensystemen erfolgt die Wärmeabfuhr - vor allem im Bereich hoher Temperaturen wie beispielsweise bei SOFC's (Solid Oxide Fuel Cells), MCFC's (Schmelzkarbonatbrennstoffzelle) oder vergleichbaren Systemen mit Temperaturen von rund 600°K vor allem aber im Bereich von 800°K aufwärts - vorwiegend durch Kühlung über die Wärmekapazität des kathodenseitig zugeführten Luftmassenstroms. Dieser Luftmassenstrom dient dabei neben der eigentlichen Oxidationsfunktion daher auch vor allem der Kühlung der Zellen des Stacks.

Luft strömt dazu entlang der Kathodenseite der Zellen und nimmt dabei die im Stack abgegebene Prozesswärme auf. Weitere Kühlkonzepte für Stacks im Hochtemperaturbereich basieren z.B. auf der Gehäusekühlung mit dem Arbeitsmittel, also dem Brenn/Rauchgas, aber auch die Kühlung mit dem Oxidationsmittel von außen ist möglich.

In all diesen Fällen handelt es sich bei dem Wärmeträger für die Kühlung des Stacks um ein gasförmiges Medium. Diese Art der Kühlung und Wärmeauskopplung aus dem Stack bringt in bekannter Weise größere Verluste mit sich, da beispielsweise der zur Kühlung mit dem Oxidationsmittel erforderliche hohe Luftüberschuss bei steigenden Eintrittstemperaturen sehr rasch zu extrem großen Luftdurchsätzen im Stack führen kann, der eine sinnvolle Wärmerückgewinnung über einen nachgeschalteten Wärmekraftprozess unmöglich macht.

Auch sind durch diese Luftmengen, die weit über dem stöchiometrisch benötigten Anteil für eine vollständige Umsetzung des anodenseitig anströmenden Brenngases liegen hohe Gebläseleistungen notwendig, die ebenso wie die aufgrund der unnötig großen zu übertragenden Wärmeströme überzudimensionierenden Heizflächen zur Vorwärmung des Oxidationsmittels, zusätzlich den Nettowirkungsgrad des Brennstoffzellensystems senken.

In der JP 09-007624,A von Mitsubishi Heavy Ind. LTD. wird dieses Problem für eine SOFC beschrieben, und ein Verfahren angegeben wie die Hilfssysteme der SOFC (Kompressor, Ventilator) verkleinert werden können um so die Effizienz des Gesamtsystems zu steigern.

Die nun über das Oxidationsmittel (Luft) abgeführte Wärme wird meist direkt für die Vorwärmung der im Gegenstrom zugeführten Prozessluft über Wärmetauscher verwendet. Eine Nutzung der Abwärme am Austritt des Luft-Vorwärmers, sieht man von einer Nachverbrennung der Abluft mit unverbrauchtem Brenngas ab, ist wegen des am Luftaustritt des Wärmetauschers vorliegenden geringen Temperaturniveaus nur noch eingeschränkt möglich. Das bedeutet letztendlich aber, dass die in derzeitigen Brennstoffzellensystemen entstehende Abwärme kaum zur Erhöhung des Brennstoffausnutzungsgrades beiträgt.

Aus wirtschaftlicher Sicht ist aber gerade eine Erhöhung der Brennstoffausnutzung notwendig um die hohen spezifischen Kosten aufgrund der eingesetzten Materialien durch Effizienzsteigerungen zu senken. Im Falle eines Stacks mit verbesserter Wärmeauskopplung und einem nachgeschalteten Prozess zur Ausnutzung der Abwärme des Stacks, kann dies zu einer deutlichen Verbesserung der wirtschaftlichen Konkurrenzfähigkeit führen, da das Wirkungsgradpotential von kombinierten Hochtemperaturbrennstoffzellensystemen mit 80% und mehr angegeben werden kann. Dieses Potential zur Effizienzsteigerung von Brennstoffzellensystemen wird zur Zeit noch nicht entsprechend genutzt.

Eine weitere bedeutende Problematik im Zusammenhang mit Stacks im Hochtemperaturbereich ist die ungleichmäßige thermische Belastung der Zellen oder auch des gesamten Stacks.

Dies hat zur Folge, dass hohe thermische Spannungen zwischen den einzelnen Baugruppen oder Bauteilen eines Stacks auftreten können, die vor allem in einem wechselnden Lastbetrieb und bei raschen Temperaturänderungen im System zu Defekten an Dichtungen, zu Rissen oder letztendlich sogar zu Brüchen von Zellen, damit zur Verringerung der Leistung des Stacks, und letztendlich in weiterer Folge auch bis hin zum Versagen des gesamten Stacks oder ähnlichem führen können. Die maximale Temperaturdifferenz im Stack wird daher durch die Belastbarkeit der Zellen, der Dichtungen und der Materialien der Zuleitungen sowie der Ummantelung begrenzt und sollte hinsichtlich einer langen Lebensdauer möglichst nicht überschritten werden.

Aber auch die Leistung von Einzelzellen und damit des gesamten Stacks wird durch einen großen Temperaturgradienten negativ beeinflusst. Im Bereich der Kühlmittelzufuhr (Oxidationsmittelzufuhr) ist die Temperatur der Zelle oder des Stacks deutlich geringer als am Austritt des Kühlmittels, dessen Temperatur sich auf dem Weg durch den Stack aufgrund der im Stack aufgenommenen Prozesswärme erhöht hat und dadurch weniger zur Kühlfunktion beiträgt.

Kühlkonzepte für tubuläre und mikrotubuläre Brennstoffzellensysteme unterscheiden sich bis dato grundsätzlich nicht von den Kühlkonzepten für planare Stacks. Auch hier erfolgt die Kühlung durch Oxidationsmittelüberschüsse und Gehäusekühlung. Sehr wohl aber ist der Aufbau von tubulären und mikrotubulären Brennstoffzellensystemen grundlegend anders als der Aufbau von planaren Strukturen.

In diesem Zusammenhang sind daher wesentlich andere Kühlkonzepte und Kühlstrategien möglich, die für planare Strukturen nur in begrenztem Maße einsetzbar und sinnvoll sind. Nachfolgend wird darauf noch detaillierter eingegangen.

Planare Strukturen sind mithilfe von Interkonnektoren den bipolaren Platten schichtartig aufgebaut. Im besten Fall können in dieser Anordnung zwei Einzelzellen durch antisymmetrischen Einbau in den Stack in optischem Kontakt zueinander stehen. Letztendlich wird eine solche Struktur aber nicht bevorzugt verwendet, da ein schichtartiger Aufbau mit abwechselnden Kathoden- und Anodenlagen den Aufbau, vor allem aber die elektrische Kontaktierung des Stacks vereinfacht.

Tubuläre Systeme, in bevorzugter Weise mikrotubuläre Systeme wie zum Beispiel das in der Patentschrift AT 412310 B dargestellte System, sind grundlegend anders aufgebaut. Hier sind Einzelzellen in einem gemeinsamen Gehäuse untergebracht. In diesem Gehäuse sind die Einzelzellen parallel zueinander angeordnet wie ein Bündel aus parallelen Rohren die sich nicht gegenseitig berühren, sodass die Einzelzellen von einem gemeinsamen Gasstrom umspült werden können. In planaren Strukturen wird die Gaszufuhr auf die Einzelzellen durch ein geeignetes Verteilersystem aufgeteilt, sodass jede Zelle einzeln angeströmt wird.

In tubulären Systemen hingegen gibt es ein Gehäuse in dem kathodenseitig in bevorzugter Weise ausführungsgemäß an einer Seite ein Oxidationsmitteleinlass für die Zufuhr des Oxidationsmittels angeordnet ist und an einer zweiten Seite, in bevorzugter Wiese an der gegenüberliegenden Seite des Gehäuses, ein Oxidationsmittelauslass, um zu gewährleisten, dass alle Zellen vom Oxidationsmittel umspült werden können. Die Zellen selbst werden daher von ein und dem selben strömungsmäßig vorher nicht aufgeteilten Oxidationsmittelstrom umspült, sind je nach Anordnung im Stack mehr oder weniger in einer Art "optischen" Kontakt zueinander. Dadurch können sich die Zellen Beispielsweise über Strahlungsaustausch der heißen Flächen gegenseitig beeinflussen. Eine direkte Kontaktierung der Einzelzellen aneinander und an eine geeignete Vorrichtung zur Kühlung, wie es in planaren Systemen mit den bipolaren Platten zum Beispiel der Fall ist, ist nicht nur aus Gründen der dadurch verschlechterten Versorgung der Zellen durch das Oxidationsmittel unerwünscht. Auch eine verringerte reaktive Oberfläche, oder schlechte Wärmeabfuhr von den Einzelzellen zählen beispielsweise zu den negativen Auswirkungen einer direkten Kontaktierung von Einzelzellen aneinander oder an entsprechende Kühlvorrichtungen.

Negative temperaturabhängige Effekte wie thermische Spannungen der Baugruppen zueinander, schlechtere Ionenleitfähigkeit oder geringere Katalysatoreigenschaften der Elektrodenmaterialien, schlechte Gesamtwirkungsgrade und ähnliches sollen nun im Bereich von Hochtemperaturbrennstoffzellen speziell der tubulären und mikrotubulären Hochtemperaturbrennstoffzellen in einem bevorzugten Temperaturbereich von rund 800°K aufwärts durch ein neuartiges Kühlsystem mithilfe dessen thermische Energie für nachgeschaltete Prozesse zur Effizienzsteigerung ausgekoppelt werden kann, vermieden werden.

### Aufgabe der Erfindung

Die Erfindung setzt sich zum Ziel die Effizienz von Stacks, vorzugsweise von tubulären Stacks, zu verbessern. Zu diesem Zweck soll die Kühlfunktion des Stacks und die Oxidationsfunktion getrennt werden.

Einerseits kann dadurch eine bessere Abwärmenutzung und eine gleichmäßigere Temperaturgestaltung im Stack gewährleistet, eine möglichst gleichmäßige Stromdichte aufrecht erhalten und die davon abhängige Degradation auf ein Minimum gesetzt werden. Andererseits ist es dadurch möglich den Luftdurchsatz, die Menge des notwendigen Kühlmittels und daher auch den Oxidationsmittelbedarf auf ein Minimum zu verringern. Dies bedeutet letztendlich einen deutlich verringerten Bedarf an kathodenseitiger Verdichterarbeit und damit einhergehend eine Verkleinerung der gesamten der Oxidationsmittelzufuhr zuzurechnenden Baugruppe. Bei entsprechender Dimensionierung der Kühlung des Stacks kann der Luftmassenstrom dabei in der bevorzugten Ausführungsform so bemessen werden, dass er eine ausreichende Sauerstoffzufuhr für den elektrochemischen Prozess garantiert. Im Idealfall wäre das eine stöchiometrische Zufuhr an Oxidationsmittel. Realistischer Weise wird das Luftverhältnis aber aufgrund von Diffusionsproblemen über der stöchiometrisch erforderlichen Menge liegen.

### Lösung der Erfindung:

Die eigentliche Wärmeauskopplung erfolgt erfindungsgemäß nun nicht mehr über das Oxidationsmittel, sondern direkt über einen an einer oder mehreren Stellen separaten in der Brennstoffzelle oder dem Stack im Bereich der reaktiven Zone angebrachten Flüssigkeitskreislauf, der in bevorzugter Weise ohne damit die Erfindung einschränken zu wollen mit einem Thermoöl als Wärmeträger betrieben wird und in keinem direkten Kontakt zu den Einzelzellen steht.

Denkbar wären aber auch andere für diesen Temperaturbereich geeignete Kühlmittel wie z.B. Flüssigmetalle, als Beispiel sei hier eine Galliumlegierung mit Anteilen von Indium, Zinn und Zink herausgegriffen, die bei Raumtemperatur bereits flüssig ist und Siedetemperaturen von über 2000°C aufweist. Letztgenannte Kühlung hätte auch noch den wesentlichen Vorteil, dass auf aufwändige Pumpsysteme verzichtet werden kann, da anstatt mechanischer einfache elektromagnetische Pumpen ins System integriert werden könnten.

Mithilfe des erfindungsgemäßen Kühlkreislaufes kann, abhängig von der Lufteintrittstemperatur, im Falle des Wärmeträgeröls typischerweise rund 60% (im Falle einer Flüssigmetallkühlung sind auch entsprechend höhere Prozentsätze möglich) der anfallenden Prozesswärme über den Flüssigkeitskreislauf abgeführt werden, der Rest wird nach wie vor über den Luftmassenstrom ausgekoppelt. Erfindungsgemäß ist der Flüssigkreislauf in der Brennstoffzelle oder dem Stack so angeordnet, dass im Vollastbetrieb ausreichend Wärme aufgenommen und abgeführt wird und die Temperaturverteilung in der Brennstoffzelle oder dem Stack annähernd auf gleichem Niveau gehalten werden kann, um unerwünschte thermische Spannungen zwischen den Baugruppen der Brennstoffzellen oder des Stacks zu vermeiden.

Die so ausgekoppelte Wärme steht nun aufgrund eines deutlich höheren Temperaturniveaus als bei Auskoppelung über den Gasstrom, da in diesem Fall zunächst das angesaugte frische Oxidations- und Kühlmittel im Gegenstromverfahren auf die im Stack erforderliche Temperatur gebracht werden muss, für nachgeschaltete Prozesse zur Verfügung und trägt damit zur Steigerung der Gesamteffizienz des Brennstoffzellensystems bei.

Da es sich bei der vorliegenden Erfindung um eine Anwendung im Hochtemperaturbereich (Temperaturbereich bevorzugt über 800°K) handelt, muss prioritär als Weg der Wärmeübertragung im Brennstoffzellensystem der Wärmeübergang durch Strahlungsaustausch betrachtet werden.

Die Strahlungsleistung einer Fläche gehorcht dem Stefan-Bolzmann Gesetz, das heißt, sie ist proportional zur vierten Potenz der absoluten Temperatur einer Oberfläche. Darin liegt der entscheidende Vorteil der erfindungsgemäßen Ausführung der Kühlung. Aufgrund der extremen Bedingungen in den Hochtemperaturbrennstoffzellen wird allein nur durch die Oberflächentemperatur der Einzelzellen, ein Großteil der entstehenden Prozesswärme als Wärmestrahlung emittiert.

Diese Wärmestrahlung kann nun, je nach Bauform und Anordnung der Einzelzellen im Stack oder dem entsprechenden Gehäuse, durch Einbringen von einem oder mehreren Kühlkörpern, an neuralgischen Punkten in den Stack absorbiert und die so übertragene Wärme durch das in den Kühlkörpern befindliche Kühlmittel in den Bereich außerhalb des Stacks abgeführt werden, wo sie weiteren nachgeschalteten Prozessen zur Abwärmenutzung zur Verfügung steht.

Die Anordnung der Kühlkörper selbst, kann in einer bevorzugten Ausführungsvariante derart erfolgen, dass sich im Betrieb über den gesamten Bereich des Stacks ein möglichst geringer Temperaturgradient einstellen kann, um die zuvor bereits besprochenen negativen Auswirkungen aufgrund zu großer thermischer Spannungen in den Baugruppen zueinander vermeiden zu können. Dass der oder die Kühlkanäle bevorzugt für die Auskoppelung von Wärme über den Weg des Strahlungsaustausches mit den Zellen dienen, bedeutet letztendlich aber nicht, dass nicht auch durch Kontakt mit anderen Bauteilen des Stacks Wärme übertragen werden kann, oder wird. Sind die Kühlkanäle des Flüssigkühlkreislaufs beispielsweise mit der Außenhülle des Stacks in Kontakt, dann erfolgt die Wärmeabfuhr aufgrund des direkten Kontaktes zu einem Teil naturgemäß auch durch Wärmeleitung.

Ebenfalls muss auch der Anteil der durch Konvektion des Oxidationsmittels auf die Kühlkanäle übertragenen Wärmemenge berücksichtigt werden.

Der entscheidende Punkt aber letztendlich ist der, dass die entstehende Prozesswärme zum überwiegenden Teil durch Wärmestrahlung an die Kühlkörper übertragen wird, und die Kühlkörper selbst in keinem direkten, sonder nur in optischem Kontakt zu den einzelnen Zellen stehen.

Die Kühlkanäle selbst werden erfindungsgemäß in bevorzugter Weise von einem Thermoöl durchströmt, welches der Aufnahme und Abfuhr der Prozessabwärme aus dem Bereich des Stacks dient.

Die dabei einzusetzenden Thermoöle besitzen derzeit neben hohen möglichen Einsatztemperaturen in der Größenordnung von rund 400°C auch entsprechend hohe Wärmekapazitäten um die nötigen Wärmemengen abführen zu können. Die unteren Einsatztemperaturen dieser synthetischen Mineralöle liegen im Bereich der Raumtemperatur. Eine zusätzliche nützliche Eigenschaft mancher Thermoöle ist die Verwendbarkeit der Öle auch in der Dampfphase.

Da sich die Thermoöle in den Kühlkanälen im Betrieb aufheizen, sich also die Oberflächentemperaturen der Kühlkanäle ändern, ist es dadurch möglich indirekt über die Wärmeabfuhr aus der Brennstoffzelle die Betriebstemperatur des Systems zu regeln. Hohe Massenströme führen zu geringeren Kühlkanaloberflächentemperaturen und damit zu einem leichterem Wärmeübergang von den Brennstoffzellen auf das Thermoöl und umgekehrt, da ein wesentlicher Punkt für den Strahlungswärmeübergang neben der Geometrie und den Emissionskoeffizienten die Temperaturdifferenz der Zelle oder des Stacks und des Kühlkanals ist. Im Arbeitsbereich des Thermoöls ist die Änderung des Wärmeflusses in Abhängigkeit der Oberflächentemperatur des Kühlkanals bei konstanter Zelltemperatur jedoch gering, womit eine gleichmäßige Wärmeauskopplung entlang des Kühlkanals erreicht wird. Dies ist deswegen sehr vorteilhaft, weil damit auch bei größeren Stacks eine gleichmäßige Zelltemperatur über mehrere Module hinweg erreicht werden kann. Zusätzlich erlaubt die Flüssigkeitskühlung hohe Lufteintrittstemperaturen bei geringen Massenströmen. Dadurch kann vermieden werden, dass Zellen am Lufteintritt erheblich mehr gekühlt werden als jene am Luftaustritt.

Eine gleichmäßigere Temperaturverteilung wirkt sich wie eingangs bereits erwähnt positiv auf das Betriebsverhalten und die Lebensdauer der gesamten Brennstoffzelle oder des Brennstoffzellensystems aus. Temperaturabhängige Effekte wie thermische Spannungen der Baugruppen zueinander, Ionenleitfähigkeit oder Katalysatoreigenschaften der Elektrodenmaterialen können somit deutlich einfacher bewältigt werden.

Ein Vorteil der erfindungsgemäßen Ausführung ist aber auch, dass in bestimmten Phasen des Betriebs, wie zum Beispiel in der Startphase der Hochtemperaturbrennstoffzelle die Kühlkanäle als Heizung für die Zellen oder den Stack verwendet werden können.

Dabei kann das Thermoöl extern vorgewärmt und die so aufgenommene Wärme an das System wieder abgeben werden. Dadurch können eine rasche und gleichmäßige Erwärmung des Stacks und damit bedingt eine schnellere Anfahrzeit und geringere thermische Spannungen beim Hochfahren des Stacks erreicht werden.

### Abbildungen:

Die im Folgenden zur besseren Erklärung dargestellten Abbildungen, die sich auf das mikrotubuläre SOFC-Konzept der AT 412310 B beziehen, sollen in keiner Weise die Anwendung der Erfindung auf andere tubuläre Brennstoffzellenkonzepte und Bauformen einschränken. Eine analoge Umsetzung der erfindungsgemäßen Ausführungen für planare Varianten der Hochtemperaturbrennstoffzellen ist ebenso denkbar oder erwünscht.
Abb.1: Detailansicht Mikroreaktor mit innen liegenden Kühlkanälen
Abb.2: Schematische Ansicht Mikroreaktorverbund mit innen liegenden Kühlkanälen (Stack)
Abb.3: Detailansicht Mikroreaktor mit außen liegenden Kühlkanälen
Abb.4: Schematische Ansicht Mikroreaktorverbund mit außen liegenden Kühlkanälen (Stack)

### Detailbeschreibung der Abbildungen:

Die in der AT 412310 B dargestellten mikrotubulären Zellen 2 sind mithilfe eines Gehäuses 1 zu einer Grundeinheit einem sogenannten Mikroreaktor verbunden. Die in diesem Patent dargestellte parallelogrammförmige Ausführung ist nur eine von vielen denkbaren Bauformen und soll in ihrer dargestellten beispielhaften Ausführungsform die Erfindung in keiner Weise einschränken.

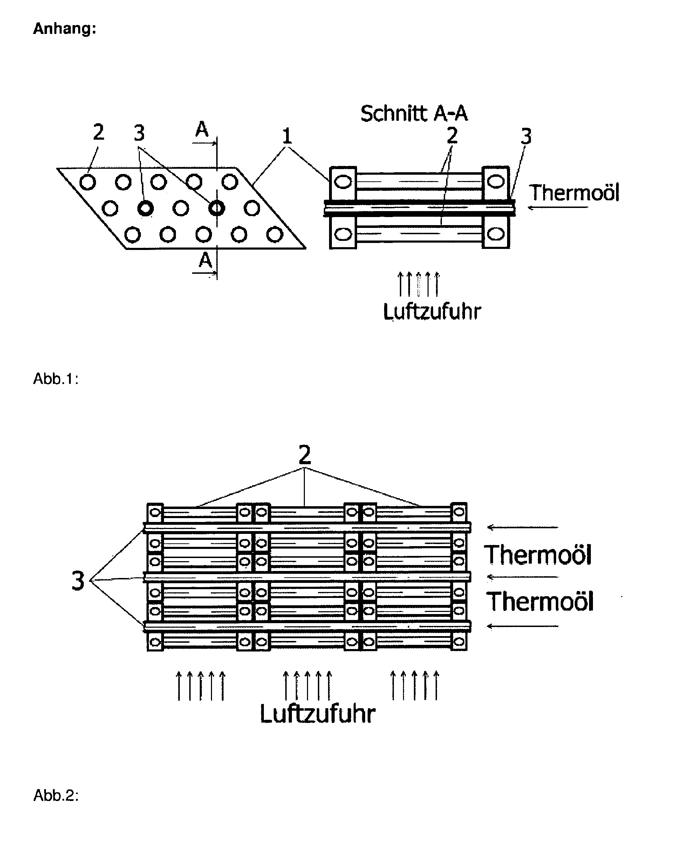

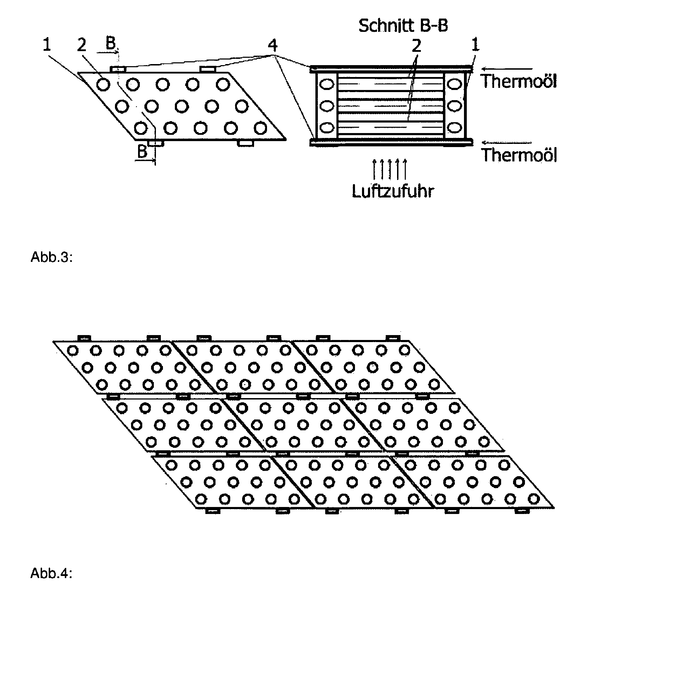

Abbildung 1 zeigt eine symmetrische Anordnung von Kühlkanälen 3 zwischen den Zellen, sodass sich in dem speziellen in bevorzugter Ausführungsform dargestellten Zellenverbund eine Einheit aus 13 Zellen 2 und zwei dazwischen liegenden Kühlkanälen 3 ergibt. Werden die Kühlkanäle entlang des Gehäuses 1 angebracht, besteht der Verbund in der beispielhaft dargestellten Ausführungsform aus 15 Zellen und vier auβen liegenden rechteckigen Kühlkanälen 4 (siehe Abbildung 3).

Aufgrund der in Abbildung 1 ersichtlichen Positionierung der Kühlkanäle 3 links und rechts von der mittleren Zelle, stehen die Kühlkanäle 3 dabei im Strahlungsaustausch mit allen im Sichtkontakt stehenden umliegenden Flächen, also primär mit den umliegenden Zellen 2. Bei einem modular aufgebauten Stack aus mehreren Mikroreaktoren (siehe Abbildung 2) sind die Kühlkanäle 3 in einer bevorzugten Ausführungsform durchgehend angeordnet, wobei die Kanäle sowohl parallel als auch in Serie, sowie als Kombination einer seriellen und parallelen Anordnung geschalten werden können.

In der rechteckigen Ausführung der Kühlkanäle 4 die entlang der Gehäuse 1 zwischen den Mikroreaktoren angeordnet sind, dargestellt in den Abbildungen 3 und 4, ist bei einem modularen Aufbau des Stacks wieder eine parallele und/oder serielle Verschaltung der Kühlkanäle möglich.

Die Form der Kühlkanäle selbst beschränkt sich dabei nicht nur auf die in den Abbildungen dargestellten runden und rechteckigen Ausführungen, sondern kann und soll in der bevorzugten Ausführungsform je nach Anwendungsbereich an die Geometrie der Zellen, der Bauform des Stacks und der gewünschten Einbauposition angepasst werden. Daher auch Profile z.B. in Dreikant- oder Achteckform, Ovalrohre, die Sternform oder halbrunde Formen um nur einige der möglichen Ausführungen zu nennen, sind denkbar.

Wichtig im Zusammenhang mit der Form der Kühlkanäle selbst ist auch die Ausrichtung der Oberfläche der Kühlkanäle zu den reaktiven Zellen selbst.

Im Teilastbetrieb in dem in bekannter Weise weniger Wärme anfällt kann es auch vorteilhaft sein die Geometrie der Oberfläche zu variieren, den Anstellwinkel der Oberflächen der Kühlkörper zu den Zellen zu verändern, Kühlkörper zu deaktivieren, oder aus dem Zellverband zu entfernen um auf die im Teillastbetrieb veränderte (verringerte) Strahlungsleistung zu reagieren und die Temperatur im Stack dadurch zu stabilisieren, anstatt die Durchflussmenge des Kühlmittels zu verändern.

Genauso kann es im Teillastbetrieb sinnvoll sein, wenn die Geometrie der Kühlkörper unverändert bleibt, aber dafür einzelne Kühlkörper nicht mehr oder nur mehr in verringertem Ausmaß vom Kühlmittel durchflossen werden und daher nicht zur Kühlleistung im Stack beitragen. Ebenso kann eine Kombination aller zuvor genannten Kühlvarianten für den Teillastbetrieb eine praktikable Lösung zur erfindungsgemäßen Thermalisierung des Stacks sein.

## Patentansprüche

1. Einrichtung zur Regelung der Temperatur eines Brennstoffzellenverbundes mit einem gemeinsamen Gasstrom zwischen den einzelnen Zellen des Verbundes, der einerseits das nötige Oxidationsmittel für die elektrochemische Reaktion bereitstellt, andererseits aber auch zur Kühlung des Brennstoffzellenverbundes dient, **gekennzeichnet dadurch, dass** durch ein an wenigstens einer Stelle des Gasstroms im Bereich des Zellverbundes ohne direkten Kontakt zu den Einzelzellen angebrachtes Kühlelement ein Teil der anfallenden Prozesswärme durch Wärmestrahlung aufgenommen wird und dadurch die Temperatur im gesamten Strömungsbereich des Zellverbundes auf gleichem Niveau gehalten werden kann.

2. Einrichtung nach Anspruch 1, **dadurch gekennzeichnet, dass** dieses zusätzliche Kühlelement von innen , vorzugsweise mit einem Wärmeträgeröl, flüssiggekühlt wird.

3. Einrichtung nach Anspruch 1 oder 2, **dadurch gekennzeichnet, dass** mithilfe des zusätzlichen Kühlelementes im Brennstoffzellenverbund so viel Energie abgeführt werden kann, dass es möglich ist den Durchsatz des Gasstroms bis auf die stöchiometrisch benötigte Menge an Oxidationsmittel zu reduzieren.

4. Einrichtung nach einem der Ansprüche 1 bis 3, **dadurch gekennzeichnet, dass** das Kühlelement in bestimmten Phasen des Betriebs zur Heizung des Brennstoffzellenverbundes verwendet werden kann.

5. Einrichtung nach Ansprüchen 1 bis 3 **gekennzeichnet dadurch, dass** die Fläche, die zur Absorption der durch Strahlung von der Brennstoffzelle an die Kühlkörper zu übertragenden Wärme dient, während des Betriebs variiert werden kann.

6. Einrichtung nach Anspruch 5 **dadurch gekennzeichnet, dass** die Variation durch verändern der Geometrie der Kühlkörperoberfläche erfolgt.

7. Einrichtung nach Anspruch 5 **dadurch gekennzeichnet, dass** die Variation durch verändern der Anzahl der im Strahlungsaustausch stehenden Flächen erfolgt.

8. Einrichtung nach den Ansprüchen 1 bis 3 **dadurch gekennzeichnet, dass** eine Verringerung der Auskopplung von Energie und eine Thermalisierung des Stacks durch variieren der Durchflussmenge von Ausgesuchten Kühlkanälen erzielt wird.
